# EUROPÄISCHE PATENTSCHRIFT

(11) **EP 0 818 637 B1**
(45) Veröffentlichungstag und Bekanntmachung des Hinweises auf die Patenterteilung: **05.09.2001**
(21) Anmeldenummer: 97890113.0
(22) Anmeldetag: 25.06.1997
(51) Int. Cl.: F16D 69/00, F16D 23/04

(54) **Reibeinheit**
Friction unit
Unité de friction

(30) Priorität: 08.07.1996 AT 119996
(43) Veröffentlichungstag der Anmeldung: 14.01.1998
(73) Patentinhaber: HOERBIGER Antriebstechnik GmbH, 86956 Schongau (DE)
(72) Erfinder: Jahn, Wolfgang, 86971 Peiting (DE); Kränsel, Paul, 86971 Peiting (DE)
(74) Vertreter: Pinter, Rudolf, Dipl.-Ing.

(56) Entgegenhaltungen:
- EP-A- 0 292 468
- AT-B- 385 826
- DE-A- 3 609 879

## Beschreibung

Die Erfindung betrifft eine Reibeinheit, insbesonders für Synchronisationseinrichtungen von Fahrzeugschaltgetrieben, mit zwei im wesentlichen ringförmigen Reibelementen, die durch Relativbewegung zur drehmomentübertragenden Anlage an zusammenwirkenden Reibflächen bringbar sind.

Anordnungen der genannten Art sind bekannt und ermöglichen beispielsweise in Kupplungen oder Bremsen, bzw. insbesonders in den angeführten Synchronisationseinrichtungen von Schaltgetrieben, eine kontrollierte, reibschlüssige Drehmomentübertragung. Bekannt sind beispielsweise Reibelemente mit im wesentlichen scheibenförmigen Reibflächen, die aber den Nachteil eines relativ hohen Kraftbedarfes für das Zusammenpressen der Reibflächen zur Übertragung eines bestimmten Drehmomentes haben. Aus diesem Grunde sind insbesonders bei kleiner bauenden Anordnungen Reibelemente üblich geworden, bei denen die zusammenwirkenden Reibflächen kegelstumpfförmig sind, wobei bei geeigneter Wahl des Konuswinkels auch mit relativ geringen Zusammendrückkräften die erforderliche Drehmomentübertragung sichergestellt werden kann.

Im Falle der angesprochenen Schaltgetriebe werden ringförmige Reibelemente als sogenannte Synchronisationsringe zur Drehzahlsynchronisation in beschriebener konischer Gestaltung eingesetzt. Diese Reibelemente bestehen zumeist aus einem Trägerring oder Stützkörper aus Messing oder Stahl und einer Reibschicht aus Friktionswerkstoffen, wie etwa organischen Reibbelägen oder Sinterreibbelägen. Beim eigentlichen Synchronisieren wird das Reibelement mit einer inneren und/oder äußeren Reibfläche auf eine oder zwei konische Gegenfläche(n) gedrückt, womit die Drehzahl der zwei zu synchronisierenden Getriebewellen in Übereinstimmung gebracht wird. Dies ist in einem Schaltgetriebe immer dann erforderlich, wenn ein Wechsel von einem Gang zu einem anderen Gang erfolgen soll.

Nach dem entsprechenden Stand der Technik sind die konstruktiven Ausführungen derartiger Reibelemente innerhalb der verschiedenen Schaltgetriebe sehr verschieden. Sie zeigen jedoch im Hinblick auf die konische Gestaltung der eigentlichen Reibflächen eine Gemeinsamkeit, welche sich - wie erwähntaus Platzgründen in den Getrieben als vorteilhaft ergeben hat.

Durch Analyse einer großen Anzahl von hinsichtlich einer zufriedenstellenden Synchronisationswirkung unzureichenden Reibeinheiten der genannten Art hat sich herausgestellt, daß die geforderten Reibmomente zur ausreichenden Drehmomentübertragung oft bereits nach einer relativ geringen Anzahl von Schalt- bzw. Synchronisationszyklen nicht mehr erreicht werden, wofür bisher eine schlüssige Begründung gefehlt hat.

Unter Zugrundelegung der oben angesprochenen bekannten Probleme geht die vorliegende Erfindung nun von der Überlegung aus, daß der konischen Gestaltung der eigentlich zusammenwirkenden Reibflächen der grundsätzliche Mangel anhaftet, daß beim Schaltvorgang bzw. zur Einleitung der Synchronisation (was entsprechend auch für Kupplungen, Bremsen oder dergleichen gilt) der zur Folge eines relativ schmalen ringförmigen Reibelementes kurze eigentliche Reibkegel auf den entsprechenden Gegenkonus geschoben werden muß und dabei nicht gesichert werden kann, sodaß ein geringes Verkanten der beiden Konen zueinander möglich ist. Dies hat zur Folge, daß die beiden Reibflächen nicht in ihrer Gesamtheit flächig aufeinandertreffen, sodaß relativ kleine, im wesentlichen sichelförmige Reiblächenbereiche spezifisch sehr viel stärker belastet bzw. sogar überbelastet werden. Als Folge stellt sich an den überbelasteten Bereichen ein erhöhter Verschleiß ein. Die Synchronisationseinrichtung bzw. allgemein die Reibeinheit erreicht aufgrund des schlechten Tragbildes nicht die geforderten Reibmomente und versagt schließlich. Durch den ungleichmäßigen Traganteil werden die tragenden Reibbereiche letztendlich thermisch zu stark belastet und geschädigt. Bei Reibelementen, welche gegen Verschleiß in Ölen mit hohen Additivzusätzen laufen, kommt es zu Reaktionen an den thermisch überbelasteten Reibbereichen, womit insgesamt ein kontinuierlich sinkender Reibwert einhergeht.

Ausgehend von der angesprochenen Problematik bzw. den oben beschriebenen Überlegungen stellt sich die vorliegende Erfindung die Aufgabe, einen gleichmäßigen reibschlüssigen Kontakt der eigentlichen Reibflächen zu ermöglichen bzw. einen ungleichmäßigen Formschluss auszuschließen. Dabei soll die konstruktive Formgestaltung und das Herstellungsverfahren entsprechend leicht zu realisieren sein.

Gemäß der Erfindung wird die genannte Aufgabe bei einer Reibeinheit der eingangs genannten Art dadurch gelöst, dass die Reibflächen jeweils zumindest annähernd als Mantelfläche einer Kugelschicht ausgebildet sind, deren Mittelpunkt auf der Achse der ringförmigen Reibelemente estweder in der Bodenebene oder außerhalb der Kugelschicht liegt. (Unter Bodenebene ist hier und im folgenden die Kugelschichtbegrenzung auf der Seite der größeren Öffnung des ringförmigen Reibelementes zu verstehen). Die jeweils zusammenwirkenden Reibflächen sind also im wesentlichen als Teil einer Kugeloberfläche ausgebildet, womit auf sehr einfache Weise ein Verkanten beim Zusammenbringen zur reibschlüssigen Zusammenwirkung ausgeschlossen wird. Diese einfache Lösung der eingangs angesprochenen Probleme überrascht um so mehr, wenn die Ergebnisse zum Friktionsverhalten betrachtet werden. Das erzielte Reibmoment konnte beispielsweise bei nasslaufenden Reibeinheiten unabhängig von der bisher bekannten Abhängigkeit von der Öltype konstant von Öl zu Öl wie auch konstant über mindestens 10000 Zyklen gehalten werden. Um so erstaunlicher war auch das Verschleißverhalten, welches über die beim Zusammenwirken der beiden Reibpartner im Laufe der Zeit auftretende Axialwegänderung gemessen wurde und nach ca. 2000 Zyklen praktisch konstant blieb.

Es ist hier darauf hinzuweisen, dass die oben angeführte Anweisung für die erfindungsgemäße Ausgestaltung der Reibeinheit bzw. die konkrete Ausführung der Reibflächen nicht im strengen geometrischen Sinne zu interpretieren ist, da naturgemäß im Rahmen der sonstigen Toleranzen bzw. Toleranzpaarungen liegende Abweichungen ohne weiteres toleriert werden können. Auch sind die heutzutage verwendeten Reibpaarungen stets in gewisser Weise elastisch, sodass Abweichungen von der genannten strengen geometrischen Beziehung für die Kugelschichtausbildung der Reibflächen in gewissem Rahmen durchaus ohne feststellbaren Einfluss auf das Reibverhalten der Reibeinheit bleiben. Es ergibt sich auf alle Fälle, dass die zusammenwirkenden Reibflächen bei der Einleitung von deren reibschlüssigem Kontakt in relativ weiten Grenzen achsenwinkelmäßig gegeneinander verkantet sein können, wobei trotzdem ein praktisch vollflächiger Formschluss der beiden Reibflächen entsteht und lediglich ein geringer Anteil der dann verkantungsbedingt nicht mehr zur Zusammenwirkung kommenden Reibflächen für die Drehmomentübertragung verloren geht, was sich aber allerhöchstens im Prozentbereich niederschlägt.

Die angeführte geometrische Beziehung ist weiters so zu verstehen, dass bei der Auslegung der erfindungsgemäßen Reibeinheit natürlich nach wie vor Augenmerk auf das eigentliche Reibsystem, also die beiden tatsächlich im Betrieb zusammenwirkenden Reibflächen bzw. deren absolute Größe und winkelmäßige Ausrichtung zu legen ist, da ja vorrangig sichergestellt sein muss, dass das gewünschte Drehmoment unter den gegebenen Bedingungen auch übertragen werden kann. Dazu wird üblicherweise zusammen mit Durchmesser und Breite der vorerst konisch angenommenen Reibflächen ein entsprechender Konuswinkel ermittelt. Es ist dann der Mittelpunkt der Mantelfläche der angesprochenen Kugelschicht so zu legen, dass er bezogen auf diese Kugelschicht außerhalb von deren Bodenebene (zumeist seitliche Ringbegrenzung), oder allenfalls noch gerade in dieser Bodenebene, auf der Achse der Reibelemente liegt, da nur so sichergestellt ist, dass die beiden zusammenwirkenden Reibflächen auch tatsächlich axial gegeneinander verschoben werden können. Sollte bei ungünstigen Verhältnissen von Ringradius bzw. - durchmesser zu Ringbreite zu Konuswinkel der Fall eintreten, dass der Mittelpunkt dieser Kugelschichte innerhalb der Ringbreite zu liegen kommt, so kann durch entsprechende Korrektur des angesprochenen Verhältnisses eine Korrektur zur Sicherstellung der geometrischen Beziehung betreffend die Lage des Mittelpunktes der Kugelschicht vorgenommen werden.

Bei Versuchen mit erfindungsgemäß ausgestalteten Synchronisationseinrichtungen von Fahrzeuggetrieben haben sich Reibmomente mit konstanten Reibwerten, einer hohen Ölunabhängigkeit und einer sehr geringen Axialwegänderung über viele tausend Schaltspiele gezeigt, wobei überlastete Reibflächenbereiche im Sinne der eingangs zum Stand der Technik beschriebenen Nachteile nicht gefunden wurden.

Das Verfahren zur Herstellung im wesentlichen ringförmiger Reibelemente, insbesonders für Synchronisationseinrichtungen von Fahrzeugschaltgetrieben, wobei die Reibflächen als Kegelstumpfflächen mit einem für die Drehmomentübertragung gewählten Konuswinkel hergestellt und anschließend kalibriert werden, ist erfindungsgemäß dadurch gekennzeichnet, dass die Reibflächen im Kalibrierschritt zumindest annähernd als Mantelfläche einer Kugelschicht ausgebildet werden, deren Mittelpunkt auf der Achse der ringförmigen Reibelemente entweder in der Bodenebene oder außerhalb der Kugelschicht liegt. Ein Verfahren zur Herstellung im wesentlichen ringförmiger Reibelemente, wobei die Reibflächen als Kegelstumpfflächen mit einem für die Drehmomentübertragung gewählten Konuswinkel hergestellt werden, ist dabei beispielsweise aus der AT 385 826 B oder aus der EP 292 468 A bekannt, wobei auch ein ggf. gleichzeitig mit dem Umformen erfolgendes Kalibrieren und Endverdichten beschrieben ist.

Der Kalibrierschritt kann gemäß vorteilhaften Ausgestaltungen des beschriebenen Verfahrens entweder durch Schleifen der Reibfläche, oder aber bei aufgesinterten Reibbelägen durch Prägen mit einem die jeweilige Gegenfläche zur Kugelschicht-Mantelfläche aufweisenden Prägewerkzeug vorgenommen werden. Im Falle eines mit einer metallischen Gegenfläche zusammenwirkenden Reibringes mit Streusinter-Reibbelag kann also die metallische Reibfläche entsprechend geschliffen und die aufgesinterte Reibfläche wie beschrieben geprägt werden, wobei es belanglos ist, ob die grundsätzlich konische Form des Reibbelages vor dem Kalibrieren vor (wie beispielsweise gemäß EP 292 468 A) oder nach (wie beispielsweise gemäß der oben genannten AT 385 826 B) dem Sintern des Reibbelages erzeugt wird.

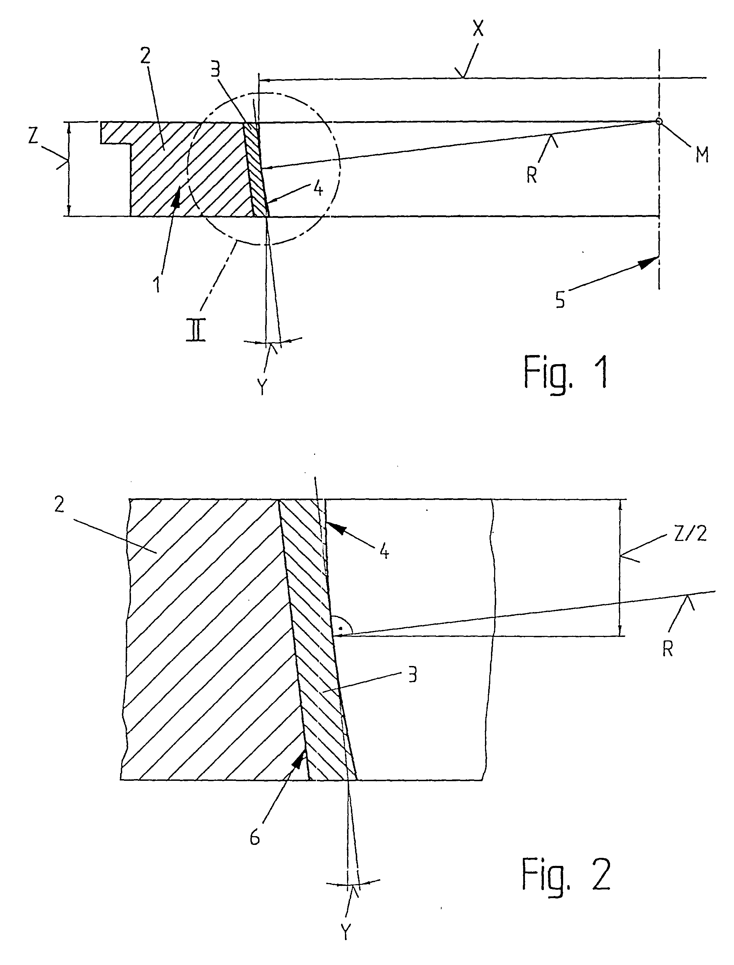

Die Erfindung wird im folgenden noch anhand des in der beigeschlossenen Zeichnung schematisch dargestellten Ausführungsbeispiels näher erläutert. Fig. 1 zeigt dabei einen teilweisen Axialschnitt durch ein erfindungsgemäß ausgebildetes Reibelement aus einer hier insgesamt nicht dargestellten .... Reibeinheit und Fig. 2 zeigt das vergrößerte Detail II aus Fig. 1.

Das im wesentlichen ringförminge Reibelement 1 weist einen Trägerring 2, beispielsweise aus Stahl oder Messing auf, der an seiner Innenfläche mit einem Streusinter-Reibbelag 3 versehen ist. Die eigentliche Reibfläche 4 liegt an der inneren freien Oberfläche des Reibbelages 3 und weist eine grundsätzlich konische Ausrichtung bezogen auf die Achse 5 des Reibelementes 1 auf, wobei der Konuswinkel Y unter Berücksichtigung von Breite Z und Radius X der Reibfläche 4 nach bekannten und im Zusammenhang mit derartigen Anordnungen üblichen Berechnungsmethoden zur Übertragung des Drehmoments gewählt bzw. berechnet wird.

Die Reibfläche 4 ist abweichend von der reinen Kegelstumpffläche, wie sie etwa die Tragfläche 6 am Übergang zum Trägerring 2 aufweist, zumindest annähernd als Mantelfläche einer Kugelschicht ausgebildet, deren Mittelpunkt M hier im Schnittpunkt der Achse 5 des Reibelements 1 mit einer Senkrechten R auf den für die Drehmomentübertragung gewählten Konuswinkel Y in der halben Reibflächenbreite (Z/2) liegt. Wie aus Fig. 1 ersichtlich, ergibt sich durch die hier vorliegenden Verhältnisse von Ringradius X zu Ringbreite Z zu Konuswinkel Y eine Lage des Mittelpunktes M der Kugelschicht im Durchstoßpunkt der Achse 5 durch die Bodenebene der Kugelschicht, welche hier mit der oberen Begrenzung des dargestellten Reibelements 1 zusammenfällt. Möglich wäre auch eine Lage von M in der Darstellung nach Fig. 1 oberhalb der oberen Begrenzungsebene des Reibelements 1. Soferne M innerhalb der Breite Z des Reibelements 1 bzw. der Reibfläche 4 zu liegen käme, könnten die beiden zusammenwirkenden Reibelemente 1 nicht mehr axial relativ zueinander verschoben werden - für diesen Fall müßte das Verhältnis von X : Z : Y entsprechend angepaßt bzw. geändert werden.

Aufgrund der dargestellen Ausbildung kann sich ein die hier nicht dargestellte Gegenfläche zur Reibfläche 4 tragender zugehöriger Innenring der gesamten Reibeinheit, der zur Einleitung der reibschlüssigen Drehmomentübertragung im wesentlichen konzentrisch und in Richtung der Achse 5 relativ zum Reibelement 1 angedrückt wird, ohne weiteres gegenüber dem Reibelement 1 verkanten, wobei trotzdem ein flächiges, formschlüssiges Tragen der beiden zusammenwirkenden Reibflächen 4 auftritt.

Das jeweilige Reibmoment ergibt sich auch bei dieser Ausführung (ebenso wie bei der bisher bekannten rein konischen Ausbildung der zusammenwirkenden Reibflächen) nach wie vor aus Ringdurchmesser bzw. -radius X, Ringbreite Z und Konuswinkel Y, was leicht einsichtig ist, wenn man bedenkt, daß (wie in Fig. 2 sichtbar) der tatsächliche "Konuswinkel" im oberen Bereich des Reibelementes 1 zwar kleiner, jedoch umgekehrt aber im unteren Teil des Reibringes entsprechend größer als der in der Mitte als Tangente anliegende Konuswinkel Y ist.

In einem speziellen Ausführungsbeispiel wird ein Einfachkonusring 1 mit dem Reibdurchmesser X=72 mm mit einem metallischen Reibbelag besintert und mit einem Konuswinkel Y von 6,5° ausgestattet. Die Konstruktion wird bei einer Ringhöhe Z von 7,9 mm so ausgelegt, daß der Krümmungsradius der Reibfläche 36 mm beträgt. Dem Gegenkonus wird der gleiche Krümmungsradius vorgegeben, der durch Schleifen hergestellt wird. Beide Teile, der Reibring und der Gegenkonus, können bei dieser konstruktiven Lösung unter einem bestimmten Winkelbereich ohne zu verkanten reibschlüssig arbeiten. Es stellten sich dynamische Reibwerte von 0,11 bis 0,12 ein, gleichgültig ob mit Mineralöl (z.B. SAE 75W-G14) oder mit syntetischem Öl (z.B. EGL 284) gearbeitet wurde. Nach 10000 Zyklen wurde eine Axialwegänderung von 0,08 bis 0,12 mm gemessen.

In einem weiteren Beispiel wird ein Doppelkonusreibring mit Reibdurchmesser X=100 mm in Form eines Flachteiles mit Reibbelag besintert und anschließend z.B. gemäß österreichischem Patent Nr. 385.826 umgeformt. Die Konstruktion des Reibringes wurde bei einer Ringhöhe Z von 9,8 mm auf einen Krümmungsradius R von 50,015 mm außen und 45,004 mm innen (2x Ringdicke subrahiert) ausgelegt. Der Winkel Y der Tangente betrug bei diesem Reibring 7°. Der Einstichpunkt M für den Krümmungsradius wurde auf den Schnittpunkt der Senkrechten der Tangente und die Ringachse S gelegt. Die Gegenkonen außen und innen wurde mit dem gleichen Krümmungsradius versehen. Der Reibring wurde für 10000 Zyklen im vollsynthetischem Öl (z.B. BOT 72/94) und im Mineralöl (z.B. SAE 75W-GL4) geprüft. Beide Prüfungen ergaben unabhängig von der spezifischen Axialkraft von 2 bis 6 N/mm² einen Reibwert von 0,105 bis 0,115 und eine Axialwegänderung von 0,1 mm. Die Axialwegänderung erfolgte innerhalb der ersten 2000 Zyklen und danach war keine Änderung feststellbar. Der Reibring zeigte außen und innen ein gleichmäßiges Tragbild.

## Patentansprüche

1. Reibeinheit, insbesonders für Synchronisationseinrichtungen von Fahrzeugschaltgetrieben, mit zwei im wesentlichen ringförmigen Reibelementen (1), die durch Relativbewegung zur drehmomentübertragenden Anlage an zusammenwirkenden Reibflächen (4) bringbar sind, **dadurch gekennzeichnet,** dass die Reibflächen (4) jeweils zumindest annähernd als Mantelfläche einer Kugelschicht ausgebildet sind, deren Mittelpunkt (M) auf der Achse (5) der ringförmigen Reibelemente (1) oder außerhalb in der Bodenebene entweder der Kugelschicht liegt.

2. Verfahren zur Herstellung im wesentlichen ringförmiger Reibelemente (4), insbesonders für Synchronisationseinrichtungen von Fahrzeugschaltgetrieben, wobei die Reibflächen (4) als Kegelstumpfflächen mit einem für die Drehmomentübertragung gewählten Konuswinkel (Y) hergestellt und anschließend kalibriert werden, **dadurch gekennzeichnet**, dass die Reibflächen (4) im Kalibrierschritt zumindest annähernd als Mantelfläche einer Kugelschicht ausgebildet werden, deren Mittelpunkt (M) auf der Achse (5) der ringförmigen Reibelemente (1) entweder, in der Bodenebene oder außerhalb der Kugelschicht liegt.

3. Verfahren nach Anspruch 2, **dadurch gekennzeichnet**, dass der Kalibrierschritt durch Schleifen der Reibfläche (4) vorgenommen wird.

4. Verfahren nach Anspruch 2, **dadurch gekennzeichnet**, dass der Kalibrierschritt bei aufgesinterten Reibbelägen (3) durch Prägen mit einem die jeweilige Gegenfläche zur Kugelschicht-Mantelfläche aufweisenden Prägewerkzeug vorgenommen wird.

## Claims

1. A friction unit, in particular for synchromesh devices for vehicle manual transmissions, comprising two substantially annular friction members (1) which, by means of relative movement, can be brought into torque-transmitting contact with co-operating friction surfaces (4), **characterised in that** the friction surfaces (4) are each at least approximately in the form of the outer surface of a spherical segment, the centre (M) of which lies on the axis (5) of the annular friction members (1) either in the base plane of the spherical segment or outside the spherical segment.

2. A method of manufacturing substantially annular friction members (1), in particular for synchromesh devices for vehicle manual transmissions, wherein the friction surfaces (4) are formed as tapered surfaces with a taper angle (Y) selected for torque transmission and then calibrated, **characterised in that**, in the calibrating step, the friction surfaces (4) are at least approximately formed as the outer surface of a spherical segment, the centre (M) of which lies on the axis (5) of the annular friction members (1) either in the base plane of the spherical segment or outside the spherical segment.

3. A method according to claim 2, **characterised in that** the calibrating step is carried out by grinding the friction surface (4).

4. A method according to claim 2, **characterised in that**, in the case of sintered friction linings (3), the calibrating step is carried out by stamping with a stamping tool having a countersurface corresponding to the outer surface of the spherical segment.

## Revendications

1. Unité à friction, notamment pour des dispositifs de synchronisation de boîtes de vitesses de véhicules, comportant deux éléments de friction (1) de forme essentiellement annulaire, qui peuvent être amenés sous l'effet d'un déplacement relatif à s'appliquer, en transmettant un couple, contre des surfaces de friction coopérantes (4), **caractérisée en ce que** les surfaces de friction (4) sont agencées chacune au moins approximativement sous la forme d'une surface enveloppe d'une couche sphérique, dont le centre (M) est situé sur l'axe (5) des éléments de friction (1) de forme sphérique soit dans le plan de base, soit à l'extérieur de la couche sphérique.

2. Procédé pour fabriquer des éléments de friction (4) de forme essentiellement annulaire, notamment pour des dispositifs de synchronisation de boîtes de vitesses de véhicules, selon lequel les éléments de friction (4) sont réalisés sous la forme de surfaces tronconiques possédant un angle de cône (Y) choisi pour la transmission du couple, et sont ensuite calibrés, **caractérisé en ce que** les surfaces de friction (4) sont réalisées, lors de l'étape de calibrage, au moins approximativement sous la forme d'une surface enveloppe d'une couche sphérique, dont le centre (M) est situé sur l'axe (5) des éléments de friction (1) de forme annulaire, soit dans le plan de base, soit à l'extérieur de la couche sphérique.

3. Procédé selon la revendication 2, **caractérisé en ce que** l'étape de calibrage est réalisée par polissage de la surface de friction (4).

4. Procédé selon la revendication 2, **caractérisé en ce que** l'étape de calibragé est réalisée, dans le cas de garnitures de friction formées par frittage (3), par gaufrage à l'aide d'un outil de gaufrage possédant la surface antagoniste respective correspondant à la surface enveloppe de la couche sphérique.
